# EUROPEAN PATENT APPLICATION

(11) **EP 2 299 757 A2**
(43) Date of publication of application: **23.03.2011**
(21) Application number: 10174628.7
(22) Date of filing: 31.08.2010
(51) Int. Cl.: H04W 48/18

(54) **Cognitive control radio access information via database or cognitive pilot channel**

(30) Priority: 22.09.2009 US 244692 P
(71) Applicant: Nokia Corporation, 02150 Espoo (FI)
(72) Inventor: Ruuska, Päivi, 33230 Tampere (FI); Kalliojärvi, Kari, 36200 Kangasala (FI)
(74) Representative: Smolander, Jouni Juhani

(57) **Abstract**

In an exemplary embodiment a cognitive radio/user equipment CR/UE receives information of where at least one cognitive control radio channel resides from at least one of the following sources: a database sharing information on licensed spectrum users, and a cognitive pilot channel CPC sharing information on licensed spectrum users. The CR/UE uses the received information to access the at least one CPC. In more specific exemplary embodiments: the information of where the at least one cognitive control radio channel resides comprises the used frequency for the at least one cognitive control radio channel; in response to at least one of expiration of a periodic timer, discovery of interference from a primary user on a channel, and entering a new geographic area, the database or CPC is checked or re-checked to detect from the received information that the used frequency for the CRC channel has changed.

## Description

### TECHNICAL FIELD

The teachings herein relate generally to wireless networks and devices operating among such networks, and are particularly related to cognitive radios that operate opportunistically using portions of radio spectrum not currently in use by networks that have designated radio resources.

### BACKGROUND

The following abbreviations are used within the description below:
CCN congitive control network
CCR cognitive control radio
CPC cognitive pilot channel
CR cognitive radio
CRN cognitive radio network
DB database
E-UTRAN evolved UTRAN
FCC federal communications commission (US)
GERAN GSM/EDGE radio access network
GSM global system for mobile telecommunications
ISM industrial, scientific and medical (originally reserved for these uses)
QoS quality of service
UTRAN universal terrestrial radio access network
WS white space

Spectrum sensing is needed in cognitive radios to find empty time-frequency slots in the radio spectrum which can subsequently be used in an opportunistic manner. Traditionally radio spectrum is divided between different radio systems in a manner that strictly allocates a specific band to a specific system. This strict allocation will be changing to a more flexible spectrum utilization at least in some frequency bands in the future. Primary users are those to whom the specific frequency band is licensed (e.g., those to whom are allocated slots) such as those operating in hierarchical or other such formal networks (e.g., cellular such as GSM, GERAN, UTRAN, E-UTRAN, broadcast systems such as television systems, and also satellite systems such as GPS, IRIDIUM). There are other networks such as WLAN, Bluetooth, ANT and Zigbee for example which operate in the ISM band, but nodes operating in these bands are not considered to be cognitive radios since they are not exploiting spectrum 'holes' within licensed bands opportunistically (since they operate in the ISM band). Secondary users are those operating outside these structured networks. Since essentially almost all spectrum in crowded areas that is usable by mobile terminals is allocated to some formal network or another, the secondary users find and utilize portions of the existing formal networks' spectrum (e.g., non-ISM band) in an opportunistic manner. Consequently, two related obstacles face the secondary user: it must not interfere with the primary users, and it must somehow find those portions of the spectrum not currently in use by any of the formal networks. For this latter reason the secondary users are generally referred to as cognitive users; they must be spectrum-aware rather than simply using the radio resources allocated by some access node controlling a cell of users.

The secondary user/cognitive radio therefore utilizes or exploits a free region of spectrum for its own transmissions, outside control of the formal networks. By "free" it is meant that the primary users/formal networks are not using the spectrum region in question when considering time, frequency and space. Alternatively there could be a band that is dedicated to several radio systems operating under a certain set of rules or policies. The common factor in any case is that the radio spectrum on which the secondary users can communicate will vary dynamically, so as to avoid undue interference with active primary users. Development of cognitive radio systems is at an early stage, and some cognitive radio systems may have a specific spectrum band allocated and may even have some central node. Regardless of whether radio spectrum bands are allocated only to the primary network systems or additionally to the cognitive system, the cognitive radio terminals themselves use the frequencies within a spectrum band opportunistically, and so the cognitive radios may change their transmission and reception parameters based on for example the network state, available spectrum, user/application requirements.

Today, radio spectrum is often used inefficiently. Some frequency bands are highly utilized (e.g., cellular and unlicensed/ISM such as in an office environment) while others are not.

Regulatory bodies are beginning to consider how this inefficiently used spectrum may be better put to use. For example, in the United States the FCC has opened the former television bands, named White Spaces, for unlicensed devices which can use that spectrum without interfering with licensed users. See for example FCC-08-260A1 (Nov 2008). Other countries are expected to also allow unlicensed secondary users on certain licensed bands. However, the secondary users need to be able to avoid interfering with the primary (licensed) users, when and where such users are active. This means that secondary users need to detect the primary user.

Very early visions of cognitive radio considered that secondary users would discover the primary users, for whom they must avoid interfering, through spectrum sensing.

A cognitive pilot channel (CPC) has been introduced in a European Union's 6th Framework program project End-to-End Reconfigurability (E²R,) ["The E2R II Flexible Spectrum Management (FSM) Framework and Cognitive Pilot Channel (CPC) Concept - Technical and Business Analysis and Recommendations", November 2007; attached to the priority application US 61/244,692 as Appendix B]. CPC is mainly targeted for (cellular) operator use, and broadcasts the information about spectrum users and operators in the area, and possibly also cost of using some op erator/frequency.

A cognitive control radio (CCR) has also been introduced in a European Union's 7^{th} Framework program project End-to-End Efficiency (E³), addressing the core of the strategic objective "The Network of the Future"; see for example Appendix C attached to the priority application US 61/244,692 which is taken from https://ict-e3.eu/. Further details of E³ can be seen at "Cognitive Control Radio (CCR) - Enabling Coexistence in Heterogeneous Wireless Radio Networks", by Kalliojärvi, Pihlaja, Richter, Ruuska (ICT-Mobile Summit 2009, June 2009, attached to the priority application US 61/244,692 as Appendix D) and "Awareness Networking for Heterogeneous Wireless Environments", by Ari Ahtiainen, Kari Kalliojärvi, Mika Kasslin, Andreas Richter, Päivi Ruuska and Carl Wijting, (WWRF22 WG6, May 2009; attached to the priority application US 61/244,692 as Appendix E).

The CCR should be operating on a known channel so the cognitive radio devices know how to access it without scanning multiple channels/bands to find it. The problem is how to select a channel for CCR which is known by all cognitive radio nodes independent of the location.

The teachings herein disclose a solution to flexibly access information of where CCR channels reside in the area, and thus how to access the CCN.

Recognize also that the cognitive control network (CCN) may operate on transport independent logical channel instead of operating on one physical radio (e.g. CCR). In this case it would be quite difficult for new nodes to discover the CCN if they do not know which radio technologies the other nodes use for connecting to the CCN. These teachings address this issue also; instead of knowing the CCR channel the node needs to know the radio technologies and channels used for CCN in the area.

### SUMMARY

In a first aspect thereof the exemplary embodiments of this invention provide an apparatus comprising: at least one processor; and at least one memory storing a computer readable program. The at least one memory storing the computer readable program is configured with the at least one processor to at least: receive information of where at least one cognitive control radio channel resides from at least one of the following sources: a database sharing information on licensed spectrum users, and a cognitive pilot channel sharing information on licensed spectrum users; and to use the received information to access the at least one cognitive control radio channel.

In a second aspect thereof the exemplary embodiments of this invention provide a method comprising: receiving at an apparatus information of where at least one cognitive control radio channel resides from at least one of the following sources: a database sharing information on licensed spectrum users, and a cognitive pilot channel sharing information on licensed spectrum users; and using the received information to access the at least one cognitive control radio channel.

In a third aspect thereof the exemplary embodiments of this invention provide a memory storing a computer readable program that is executable by at least one processor to perform actions comprising: receiving information of where at least one cognitive control radio channel resides from at least one of the following sources: a database sharing information on licensed spectrum users, and a cognitive pilot channel sharing information on licensed spectrum users; and using the received information to access the at least one cognitive control radio channel.

In a fourth aspect thereof the exemplary embodiments of this invention provide an apparatus comprising: means for receiving information of where at least one cognitive control radio channel resides from at least one of the following sources: a database sharing information on licensed spectrum users, and a cognitive pilot channel sharing information on licensed spectrum users; and means for using the received information to access the at least one cognitive control radio channel.

### BRIEF DESCRIPTION OF THE DRAWINGS

The foregoing and other aspects of these teachings are made more evident in the following Detailed Description, when read in conjunction with the attached Drawing Figures.

Figure 1 is an illustration of various local cognitive radio networks accessing the information of the primary users according to a cognitive pilot channel CPC or a database DB.

Figure 2A-C detail specific instances from Figure 1 for a device connecting to a cognitive control network using a cognitive control radio channel using information obtained from the database or cognitive pilot channel according to exemplary embodiments of the invention.

Figure 3 is a block diagram showing relevant functional blocks for a cognitive radio device according to an embodiment of the invention.

Figures 4A-B are signaling diagrams showing access by a cognitive radio device of the information about the CCR via a database or the CPC according to exemplary embodiments of the invention.

Figure 5 is a state diagram illustrating the process of a cognitive radio device discovering and connecting to local cognitive radio networks according to an exemplary embodiment of the invention.

Figure 6 is a plan and sectional view of a cognitive radio device embodied as a mobile user equipment UE according to an exemplary embodiment of the invention.

Figure 7 is a schematic process flow diagram showing operation of a method, and execution of computer executable software stored on a memory, according to an embodiment of the invention.

### DETAILED DESCRIPTION

One reason for inefficient radio spectrum use arises from spectrum being allocated differently in different countries/areas. A particular band may be actively used in one country but unused in another. Some frequency bands are active globally (e.g., cellular bands for globally adopted protocols), which eases burdens on wireless equipment manufacturers. For similar reasons and also for spectrum efficiency, it is desired to have the similar universality, from the equipment manufacturer's perspective, for extensions into the cognitive radio domain, so that a mobile handset's cognitive radio function can configure itself properly regardless of the frequency bands and waveforms in use at a particular geographic area.

In general a CPC could help the mobile terminal to discover the right operator and/or network on the spectrum without the need to perform time and energy consuming scan of all possible frequencies as in early spectrum sensing solutions. From the database or CPC, the cognitive radio device can obtain static and wide area, non-localized information of the spectrum use situation, e.g. the channels allocated for use, and the operators and networks using the channels. But with spectrum sensing the cognitive radio device can discover the dynamic changes in the spectrum use, e.g. primary user starting or stopping its' activity, and also other secondary users like local, short range users.

One option for selecting a CCR known to the cognitive radios is to use the (generally global) ISM band (e.g. 2.4 GHz) for CCR, but in many places it is quite crowded by user networks such as 802.11, Bluetooth, Zigbee, and/or proprietary technologies. Another problem of using the ISM band is that it is generally more efficient if the control band resides close to the band that the cognitive user radio is able to use. This makes it simpler to cover the same range as the user radio does, and it might be even possible that the CCR technology uses the same hardware as the user radio. Also the amount of the data in CCR may decrease, if all local cognitive user networks/nodes, possibly in totally different bands, do not use the same CCR channel.

Another option is for the CCR to use channels which are reserved/licensed for it. However, history has proven that it is almost impossible to find a globally available band for local connectivity use. Cognitive radios are supposed to use spectrum more flexibly, and so licensing/reserving a band for CCR is not aligned with this principle. There is also the issue noted above for ISM, where it is preferable that the CCR band reside close to the band which user networks are using.

Further to the problem noted above, embodiments of this invention provide a method, executed from the perspective of the cognitive radio or CR user, by which the CR device receives information of where at least one CCR channel resides from at least one of a DB sharing information on licensed spectrum users, and a CPC sharing information on licensed spectrum users. The CR device then uses that received information to access the at least one CCR channel (in which in an embodiment, access means tuning to and receiving on the at least one CCR channel). The CCN is a cognitive control network which uses the CCR as a physical transport channel for control signaling. Whereas the CPC is used to distribute more static information such as for example the listing of network types operating in the area and channels in use, the CCR is used to distribute signaling directly between the cognitive radio devices without those devices each having to access the central storage such as the DB, and the CCR additionally carries more dynamic information.

In an embodiment, the information on the licensed users that is in the DB or that is carried on the CPC is localized information (geo-location specific), and can include for example band/channel information of the primary user network, and optionally also other information such as for example network type, utilization, QoS, and services offered. This information is most relevant for initial access; a frequency-agile user network may not reside in a known band or channel. The new node may discover this information via CCR, and does not have to scan many bands or channels to discover the desired network.

The CCN information which may be carried on the CCR and received by the cognitive radio nodes can include one or more of the following:
- spectrum sensing information reported by other cognitive radios. In this manner the CCR may be used for sharing the results of spectrum sensing among the various cognitive radios. A cognitive radio node which has detected a primary user in the band may also share the information on the CCR so the other nodes know to avoid it.
- negotiated local spectrum use. The various nodes and networks may negotiate about the spectrum use via the CCR, for example which channels the primary network is using and when. This way the primary networks are able to select the best available bands and decrease interference between the primary network and the secondary users. Relevant to sharing the spectrum sensing information noted immediately above, the nodes/networks may also negotiate about spectrum sensing responsibilities: if different cognitive nodes/networks sense different parts of the band and share this information on the CCR, all cognitive nodes in the area know where the primary users are operating across the whole band, not only on channels which the individual cognitive radios are sensing. Also the spectrum sensing responsibilities may be negotiated between the nodes via the CCR
- local spectrum regulations and policies. The nodes (cognitive or primary) which do not have access to spectrum regulations and policies otherwise may access this information in the CCR.

In an embodiment, the CCR may be a low power radio technology. Since CCR is targeted for transmitting small amounts of locally relevant data, it may be used also for other than cognitive radio purposes, such as for example social networking and awareness signaling. So in an embodiment of the invention, from the same DB or CPC sharing information on licensed spectrum users and which has the information of where at least one CCR channel resides, the CR also receives information on at least one of social networking in the local area and awareness signaling in the local area.

The cognitive radio can receive this information on the licensed spectrum users from various sources; for example an Internet hosted DB which the CR accesses via a local WLAN hotspot or via a cellular (licensed) link, or a CPC which it receives from a cellular access node/base station/nodeB/e-nodeB or any other transmitting/broadcasting source. In an embodiment, a WLAN access point with access to the DB maintaining the CPC data (e.g., an access point controlled by a cellular network) can broadcast the CPC directly which the cognitive radios then receive. The cognitive radios check the DB/CPC frequently, since the cognitive radio channels which can be used by secondary users changes dynamically.

From the perspective of the DB host/CPC transmitting node, embodiments of the invention include compiling information of where at least one CCR channel resides with information on licensed spectrum users, and providing the compiled information to users through at least one of a database accessible to wireless radios and transmitting (e.g., broadcasting) the compiled information on a wireless channel. The compiling includes storing these two sets of information in a computer readable medium, locally at the DB host/CPC transmitting node.

The 'licensed users' are those entities, mobile stations as well as network nodes, operating within one or more infrastructure networks in which spectrum is licensed rather than used on an opportunistic basis. As noted above, certain ad hoc networks such as WLAN and Bluetooth operate in the ISM band and nodes operating in these networks are generally not considered as cognitive radios. Cognitive radios form ad hoc networks but the frequencies 'holes' they use in their cognitive radio networks lie within frequency bounds of the licensed spectrum. Since the ISM band is unlicensed, users operating there (for example Bluetooth and WLAN) are not primary users which the cognitive radios avoid interfering since the cognitive radios are not searching for spectrum holes in ISM bands.

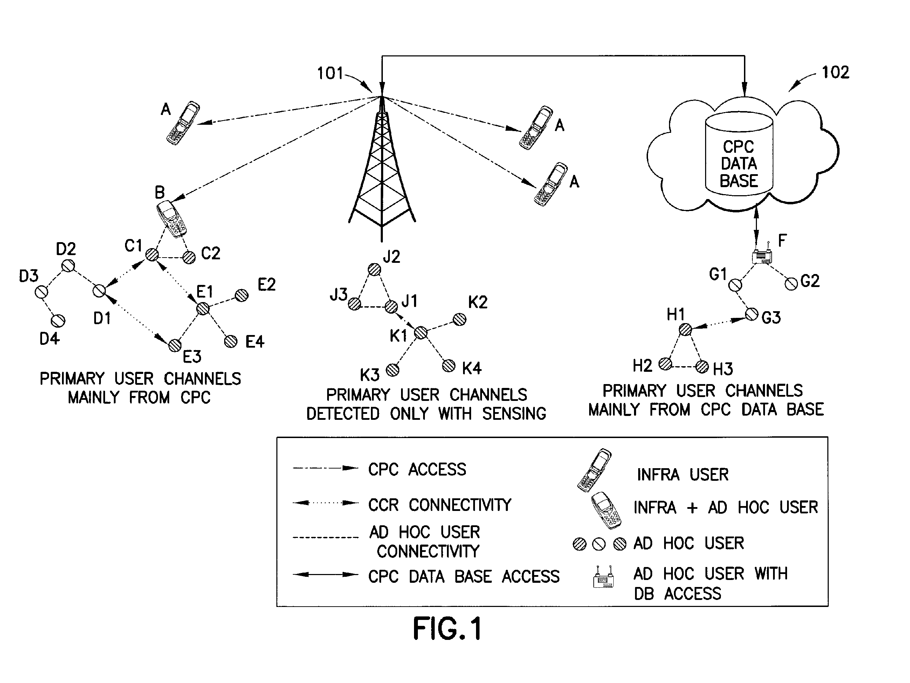

Before detailing further various aspects and implementations of the invention, consider Figure 1 which illustrates various arrangements by which the CPC and the CCR/CCN can co-exist. This will make clearer how the local cognitive radio networks access the information of the primary users. Figure 1 is not meant to be comprehensive, but shows various common arrangements.

There is a transmitting node 101 which in Figure 1 is implemented by example as a cellular base station/nodeB/e-nodeB. Primary users are designated mobile stations A (infra user=infrastructure network), and also mobile station B is a primary user with dual functionality as a cognitive radio at the same time. The base station 101 gets the information on the primary users for other co-located or very near other cells/primary networks from the database 102, and updates the database 102 with information on its own primary users. This primary user information may be as detailed as which spectrum they are operating on at a given moment, or as broad as the channels/bands which are reserved even if not all of those channels/bands are in use at a given time. The primary users A receive the CPC directly from the base station 101, in a regularly repeating broadcast for example.

The dual use mobile station B also receives the CPC in the same manner as mobile stations A since mobile station B operates as a primary user as well as a cognitive user. As a cognitive radio, mobile station B is in a CRN with mobile stations C1 and C2 and so shares the information on the primary users with those CR mobile stations C1 and C2. One or more of the CR mobile stations (C1 shown) then shares the primary user information with the other CRNs shown there, made up of mobile stations D1 through D4 and E1 through E4. Note that any one or more of the CR mobile stations B through E4 can also supplement the CPC information with their own spectrum sensing for further granularity of what portions of the spectrum are actually being used at any given moment, which they may or may not share with other CRs in those CRNs. Sharing of the primary user information between the various CR mobile stations B through E4 is via wireless messages.

Also at Figure 1 there is a CR mobile station F which, independent of any cellular or primary network, has access to the Internet where the DB 102 is hosted. For example, node F may be a WLAN access point which also operates as a cognitive radio, or at least which provides the information on the primary users from the DB 102 to the cognitive radios G1 and G2 which access it. CR mobile station G1 provides that same information to user G3, which extends that same information to another adjacent CRN made up of CR mobile stations H1-H3. Like nodes B through E4, any of the CR nodes F through H3 may supplement and/or share the information on the primary users which originated from the DB 102 with their own spectrum sensing information.

Also shown at Figure 1 are two further CRNs, one having CR mobile stations J1 through J3 and the other having CR mobile stations K1 through K4. None of these have access to the DB 102 or to the CPC which the base station 101 transmits, and further they are physically too far spaced from the other CRNs to get the primary user information from them, so these CR mobile stations must rely solely on spectrum sensing to discover the primary users.

The CCR is targeted for communication between local area cognitive radio nodes and networks. The CPC is targeted for wider area networks, e.g. for a mobile station/terminal discovering cellular connectivity to find out the operators and their used channels in the area. The local area networks need to avoid interfering with the primary/licensed users. In summary, Figure 1 illustrates how they can get the information of the primary users: scanning, multiradio node accessing the CPC/database, and forwarding the information in the CCR.

The CCN is a network in which the devices are connected using CCR. A CCN may possibly also operate on a transport independent logical channel. However, in this case at least two of the CR mobile stations should have same transports to be able to forward the CCN data. Also, discovering the CCN may be difficult if the device does not know which transports/channels the other devices in the CCN use (i.e. what are the CCRs used in this CCN).

DB access and the CPC are targeted for accessing mainly the information of the primary users in E³ (see background above). However, in accordance with an embodiment of this invention one or both of them are also used to share the information of where the CCR channel/s reside. This way the CR mobile stations (and any other CR nodes) which anyway would access the database (e.g. to find the white spaces in its area) or the CPC to gain information of the primary users, would gain information of the CCR channel as well. So in the example of Figure 1, node C1 need not search for the channel to connect with nodes E1 or D1 in different CRNs, it knows the CCR channel from nodeB which relayed the primary user information and the information on the CCR, and nodeB received both those pieces of information on the CPC.

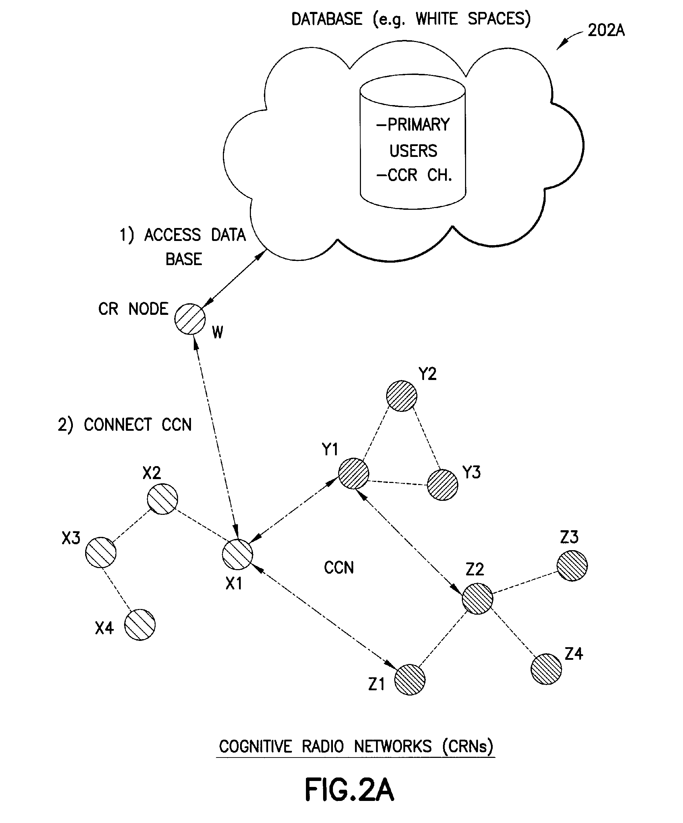

Consider the specific examples of Figures 2A-2C. Figure 2A illustrates the case where a cognitive radio W connects to a database 202A to access a first set of information on the primary users in the area, including their frequency bands. From this the cognitive radio W can determine what part of spectrum is available for secondary use. But from that same database access the cognitive radio W also learns a second set of information about the CCR channel(s), and from that additional information knows how to connect to the CCN and where to find information of other secondary users. In the example at Figure 2A, node W determines from the second set of information (which is obtained with the first set of information in a single access of the database 202A) the CCR channel information which it uses to connect to node X1 which is in a CRN with nodes X2 through X4. That same CCR channel is used to connect the X1-X4 CRN with an adjacent CRN having Y1 through Y3 (the CCR channel for this link is shown going between nodes X1 and Y1), and also to connect the X1-X4 CRN with an additional adjacent CRN having Z1 through Z4 (the CCR channel for this link is shown going between nodes X1 and Z1). There is also a CCR channel between nodes Y1 and Z2, and the three CRNs can join if they choose into one larger CRN due to their CCR channel interconnects.

The CCR channels linking the various nodes of the CCN keep those nodes updated as to the information on the primary/licensed users, and also of any changes to the CCR itself (since the CCR itself may be an opportunistic channel in some embodiments). Information shared in the CCN via the CCR channel may therefore be updated frequently. Since much of the information in the CCN is mainly relevant only locally, it is not efficient to store and access all that information from the database, which is mainly targeted for sharing primary user information.

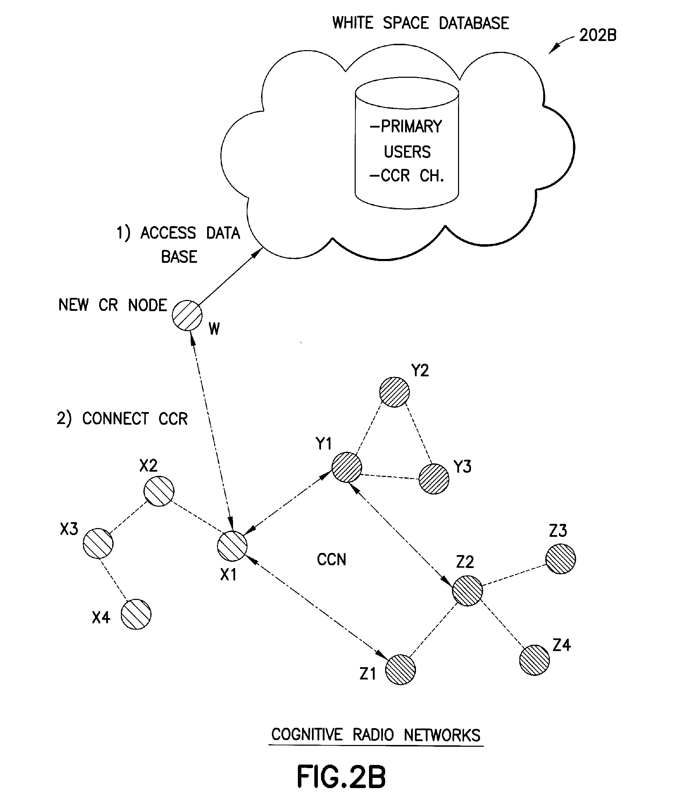

Figure 2B is similar to Figure 2A but the database 202B is specifically a white space database that can be accessed with user geo-location information. In this instance the accessing CR node W determines its own geo-location (e.g., via a global positioning system, triangulation among multiple transmitting nodes/base stations, position estimation based on received signal strength of a signal received from a transmitting station, etc.), accesses the white-space database 202B using that determined geo-location information, and retrieves from the white-space database the first and second sets of information noted above for Figure 2A which is more specific to the geo-location information with which the node W accessed the database.

The CCR network enables information sharing between secondary users in the white spaces, for example by advertising CR networks and services (which yields fast access to the correct network), and/or negotiating of spectrum use between the networks (which yields an efficient spectrum utilization). If the CCR is in the white-space database, the CCR channel is valid for the location which the requesting device has given to the DB and the device gets for example a list of available channels (which are not used by primary users). If the primary user situation in white-space database is stable, then the CCR channel can be fixed in the area, sometimes for an extended period of time. As with Figure 2A, the CCR channel information is accessed in an embodiment at the same time as the information of the primary users - there is a single database access for both sets of information.

Note also that the same physical transport channel need not be used to share the information across all the different CCNs. For example, at Figure 2B node W can use the CCR as physical transport channel to share the information with node X1, while node X1 uses another physical channel in use by the X1-X4 nodes (an "X" channel) to share the same information with node Y1 and with node Z1. Also, node Y1 may use another physical channel in use by the Y1-Y3 nodes (a "Y" channel) to share the same information with node Z2 in the Z1-Z4 cognitive network. So for example, each of nodes X1, Y1, Z1 and Z2 in Figure 2B receive the CCN information on one physical transport channel and distribute it on a different physical transport channel.

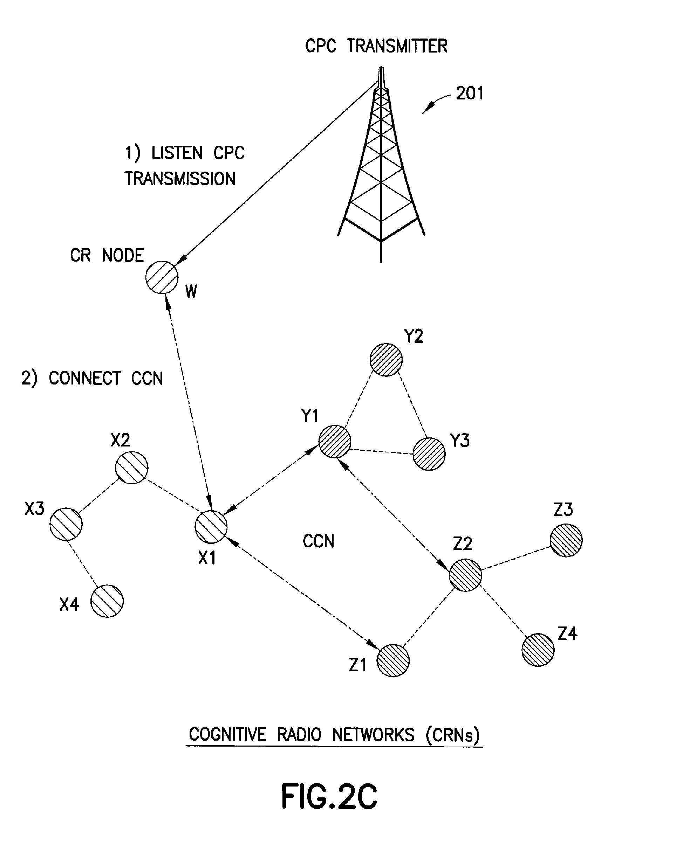

Figure 2C is similar to Figure 2A except that the accessing cognitive radio mobile station W obtains the two sets of information by listening to the transmitting node's 201 CPC, which in an embodiment is broadcast. Like the DB implementation, it is generally not considered efficient for the CCRs to share all of their CCN-related information with one another via the CPC (since the CPC will generally cover a wider area than a CCN having only a few members), so in an embodiment the CRN-specific information (e.g., which spectrum 'holes' to use for cognitive network traffic, where a new primary user was sensed) is exchanged via the CCR channels rather than shared on the CPC itself.

Recall from Figure 1 that the database and CPC are expected to share static information of the spectrum users. Thus, the CCR channel may also reside on the same channel for an extended period of time. However, by the teachings of this invention the CCR channel does not need to be fixed. It can change depending on the place, and even time, and still it is a known channel for all the nodes which access the database and/or CPC.

If the CCN is not using a one physical radio, but is implemented as a transport independent logical channel using various wireless technologies, the database or CPC transmissions may indicate the means to connect to the CCN logical channel instead of indicating the CCR frequency. For example the CPC/DB can indicate the various radio technologies (many CCRs) which are used for the CCN, and also on which frequencies they reside. In either implementation, still the DB/CPC carries the above noted second set of information which is information of where at least one CCR channel resides.

So according to the above teachings, information about a cognitive control channel(s) is stored with (database), transmitted (from transmitting node) and received (at the accessing CR mobile node) together with information about licensed/primary users or spectrum that is licensed in a particular geo-location.

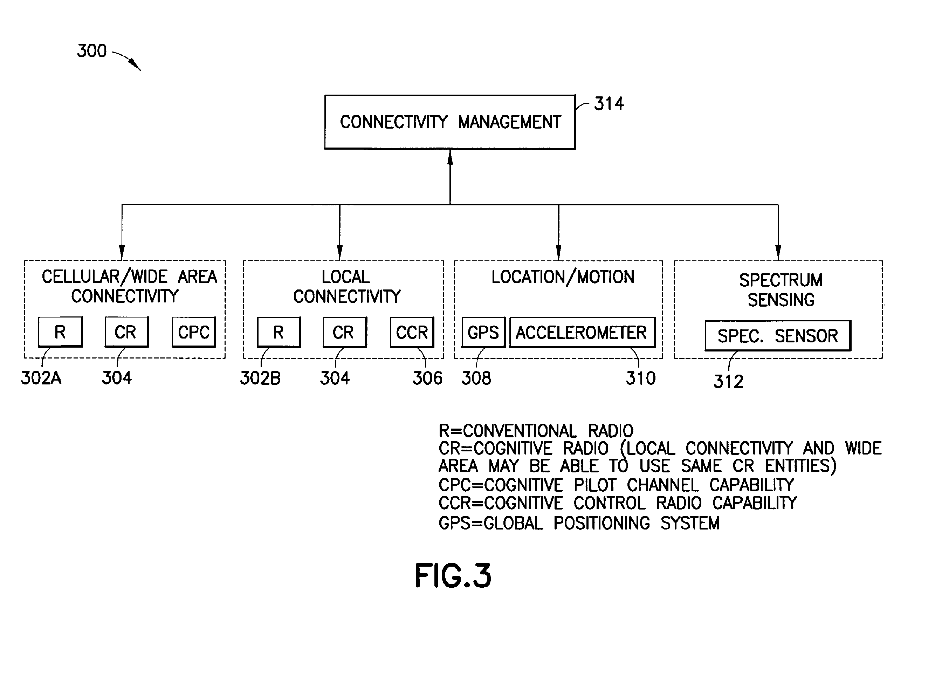

An exemplary but non-limiting cognitive radio 300 may have the following capabilities as shown at Figure 3:
- A cognitive radio 304 for local user data connectivity.
- A cognitive control radio (CCR) capability, shown as a CCR module 306.
- Capability to access cognitive database, or CPC. The database may be accessed e.g. if the device 300 has internet access (e.g., WLAN radio 302B). In an embodiment the CPC is assumed to support mainly operator (cellular) connectivity and so this capability is satisfied by the cellular radio 302A of Figure 3. Some implementations may of course have both WLAN 302B and cellular 302A radios.
- Capability to know its location. In case the data is accessed from the CPC, the CPC may only indicate the information which is valid within the range of the CPC, and the device 300 may not need to know its own location intrinsically. Otherwise, this capability is satisfied by a GPS unit 308, an inertial sensor/accelerometer 310, or the cellular radio 302A which can determine position using triangulation, measuring received signal strength changes, or just receiving its own information from a primary network.
- Spectrum sensing, which will often be necessary if the device 300 is operating as a secondary user on a licensed band. Conventional radios also use some kind of spectrum sensing, e.g. to discover whether the channel is free to send, or to discover interfered channels which use should be avoided, or even discover whether there are active nodes to which to connect. Generally the spectrum sensing is done with a combination of processor, locally stored software to run a cyclo-stationary feature detection algorithm or similar, and a radio receiver to scan along the various frequencies to see what activity exists. Such a combination is shown in Figure 3 simply as a spectrum sensing module 312.

Also at Figure 3 is a connectivity management block 314 to coordinate these other components, generally also a processor.

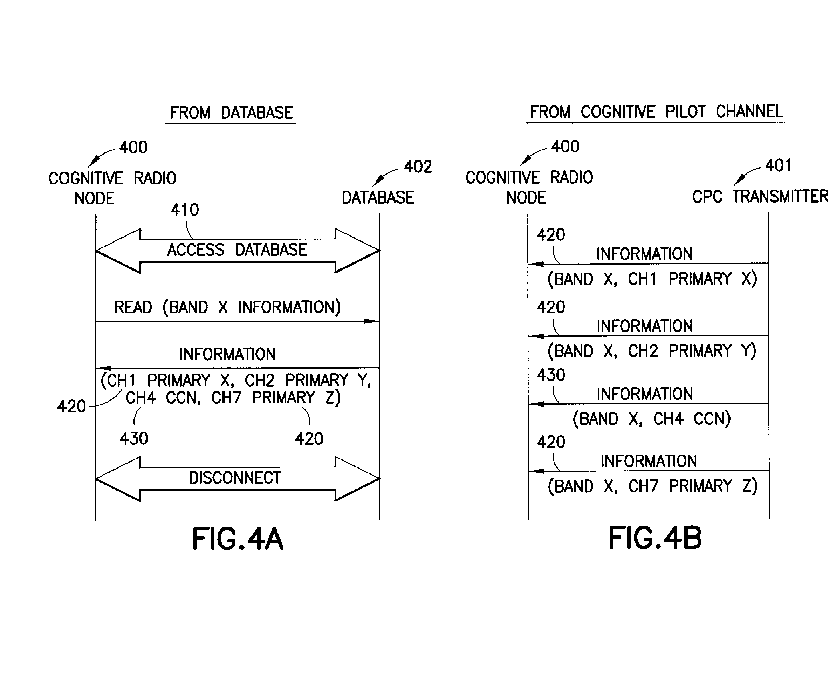

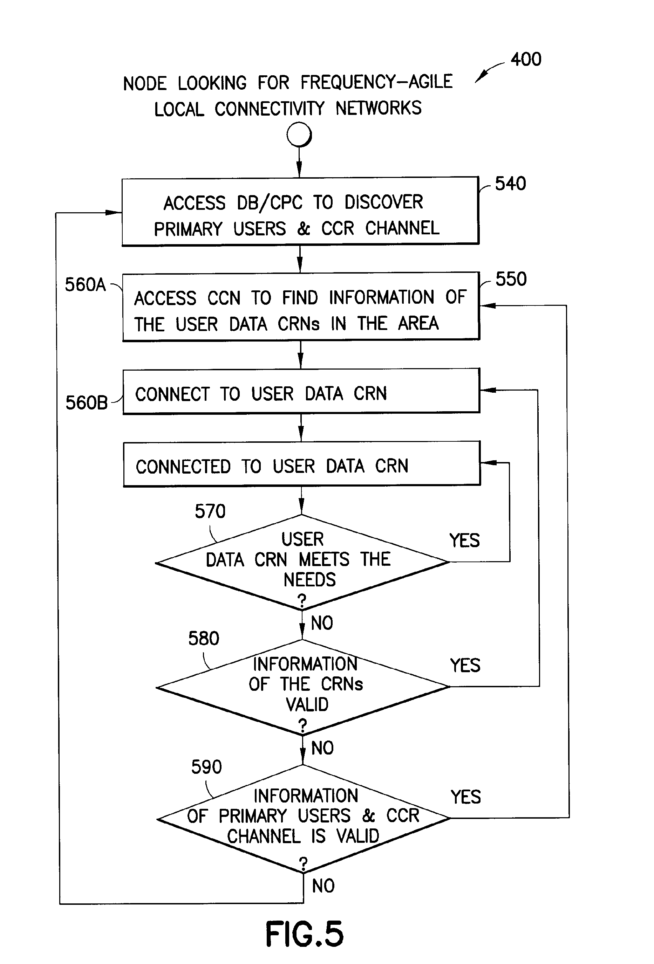

Now is described with reference to the signaling diagrams at Figures 4A-B and the state diagram at Figure 5 the overall operation from the perspective of the cognitive radio device 400, which is looking for cognitive radio local connectivity. It may be looking for local connectivity because the user has activated an application which requires local connectivity, or it may regularly or upon location change check what local connectivity possibilities there are in the area. The device 400 first accesses 410 the cognitive radio database (white space database is one example) or starts receiving CPC transmissions (shown as step 1 at Figures 2A-2C). The device 400 may need to access the DB/CPC anyway to discover the primary users.

Next the device 400 gets the information 420 of the spectrum user status (e.g., information of the primary users), and also information 430 of how to access CCN (e.g. on which frequency the CCR channel is, or if multiple on which frequencies the CCR channels are). At the DB access shown at Figure 4A, there is a single access of the database from which the accessing node obtains both information regarding the primary users and the CCN information. When the information is received at the node via the CPC as in Figure 4B, some of the information regarding the primary users may be received in one or more messages 420 while the information on the CCN is received in a separate message 430, though the message 430 with the CCN information may also include primary user information as Figure 4B illustrates or the receiving node may get all of the primary user information as well as the CCN information from a single broadcast message. After getting the information of how to access the CCN (e.g. CCR channel), the device 400 discovers and connects the CCN using the CCR (shown as step 2 at Figures 2A-C). Together this is also shown as block 540 at Figure 5

After joining the CCN, at block 550 of Figure 5 the device 400 may access the information of the cognitive radio networks (CRN) residing in the area and connect at block 560A of Figure 5: it may send an information query in the CCN, and receive responses from other CR nodes which are connected to CRNs residing in the area. Those other CR nodes may also transmit some information of the CRN regularly in the CCN. But if the device 400 looking for CRN connectivity such as at block 560B of Figure 5 wishes to have a bit more information (e.g. information of the services, QoS, utilization, etc.), a query-response may instead be used as a more efficient and faster way to access such information. Also the device 400 may specify some requirements already in the query, and get responses only from the other CRN nodes which meet the requirements. Finally, after receiving the information from the CCN, the device 400 may connect to the CRN at block 560A or 560B which seems to meet the needs.

At block 570 there is an iteration in case the first attempted user data CRN does not meet the CR nodes' needs. There is a check at block 580 if the information of the CRNs is valid, and if not block 560A is re-entered to search for another user data CRN. The data at block 580 is valid if its location has not changed, and/or if the information of the CRNs from the CCR is still recent. Also at block 590 of Figure 5 there is a check that the information of the primary users and the CCR channel is valid, and if not then block 550 is re-entered to find information on other user data CRNs in the area. The primary user/CCR information is valid if the device's location has not changed dramatically, and the CCR channel is still valid if it is still the same as the device 400 previously found that CCR channel. The check at block 590 may be a timer; if the primary user information and the CCR information has been accessed within some predetermined time period then is it considered valid, otherwise it is not.

For completeness, now are described considerations for how the CCR channel may be selected. The entity (e.g. regulatory body or company which maintains the databases) which is responsible of updating the CPC/DB may change the CCR channel based on the changes in primary users. That entity should be aware of the primary user operation, which it also lists in the DB/CPC information. That entity selects suitable channel for CCR. If there are changes in the primary user channels to overlap with CCR channel, the CCR channel is changed. A device participating to CCR should be aware of the change of the channel. This means that at least some of the devices shall regularly check the CCR channel, or when primary user activity is detected in CCR channel (e.g. by spectrum sensing). However, because the primary user situation is expected to be quite static, this check does not need to occur very often. Also the node 400 accessing the DB/CPC may signal the change of the CCR channel to other nodes using CCR.

The devices participating in the CCR may also find that the given CCR channel as bad (e.g. interferences). The devices may indicate that the channel is bad to the DB/CPC "owner", and the owner may allocate a new channel for CCR. The devices may indicate that the channel is bad by accessing database. For CPC there is also an uplink that is planned which may be used to indicate problems with the CCR channel. In case the CCN is only operating on transport independent logical channels, the device/network joining the CCN may use the same means to indicate to the DB/CPC "owner" which radio it uses as the CCR.

Certain implementations exhibit the following technical effects as compared to the prior art solutions detailed in the background section above:
- easy detection of CCR channels.
- The CCR channel(s) are close in frequency to the channels used by the cognitive radio user networks.
- One radio can be used for connecting CCN and user CRN.
- There's no need to reserve/license a band for CCR use, or to use the crowded ISM band.
- The frequency of the CCR can be changed, e.g., if a primary user needs the previously used frequency.
- Different locations can use different CCR channels, yet it is still easy to discover via the accessing DB/CPC.
- In case the CCN operates on a transport independent logical channel, various possibilities to access CCN (radio types and frequencies) can be indicated to new users.

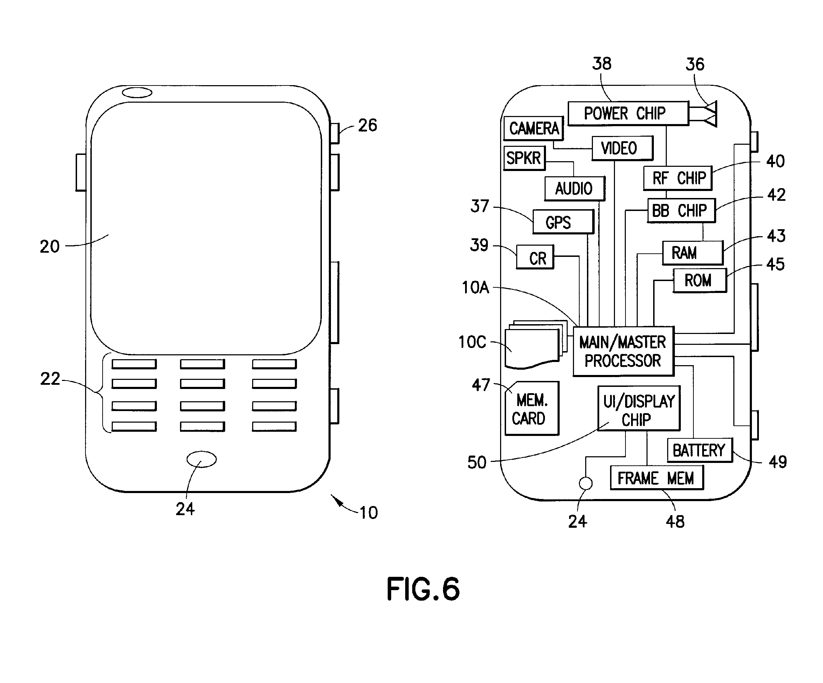

Figure 6 illustrates detail of an exemplary CR embodied as a mobile station MS 10 in both plan view (left) and sectional view (right), and the invention may be embodied in one or some combination of those more function-specific components. At Figure 6 the MS 10 has a graphical display interface 20 and a user interface 22 illustrated as a keypad but understood as also encompassing touch-screen technology at the graphical display interface 20 and voice-recognition technology received at the microphone 24. A power actuator 26 controls the device being turned on and off by the user.

Within the sectional view of Figure 6 are seen multiple transmit/receive antennas 36 that are typically used for cellular communication. The antennas 36 may be multi-band for use with other radios in the UE. The power chip 38 controls power amplification on the channels being transmitted and/or across the antennas that transmit simultaneously. The power chip 38 outputs the amplified received signal to the radio-frequency (RF) chip 40 which demodulates and downconverts the signal for baseband processing. The baseband (BB) chip 42 detects the signal which is then converted to a bit-stream and finally decoded. Similar processing occurs in reverse for signals generated in the apparatus 10 and transmitted from it. In exemplary embodiments in which the information is received via the CPC, the CPC is received at the antennas 36 and processed in the RF chip 40 and BB chip 42. While not separately illustrated it is understood that a cellular band transmitter and receiver are embodied within the power chip 38.

The graphical display interface 20 is refreshed from a frame memory 48 as controlled by a user interface chip 50 which may process signals to and from the display interface 20 and/or additionally process user inputs from the keypad 22 and elsewhere.

Certain embodiments of the UE 10 also include one or more secondary radios such as a cognitive radio 39 and a global positioning receiver 37, either or both of which may incorporate an antenna on-chip or be coupled to an off-chip antenna. The cognitive radio 39 includes a low power transmitter and low power receiver as noted above. Throughout the apparatus are various memories such as random access memory RAM 43, read only memory ROM 45, and in some embodiments removable memory such as the illustrated memory card 47 on which the various computer executable software programs 10C are stored. All of these components within the UE 10 are normally powered by a portable power supply such as a galvanic battery 49.

The aforesaid processors 38, 40, 42, 44, 46, 50, if embodied as separate entities in a UE 10, may operate in a slave relationship to the main processor 10A, which may then be in a master relationship to them. Embodiments of this invention may be disposed across one or various chips and memories as shown or disposed within a different processor that combines some of the functions described above for Figure 6. Any or all of these various processors of Figure 6 access one or more of the various memories, which may be on-chip with the processor or separate therefrom. Similar function-specific components that are directed toward communications over a network broader than a piconet (e.g., components 36, 38, 40, 42-45 and 47) may also be disposed in exemplary embodiments of the access node/transmitting station for the case of the CPC embodiments, which may have an array of tower-mounted antennas rather than the two shown at Figure 6.

Note that the various chips (e.g., 38, 40, 42, etc.) that were described above may be combined into a fewer number than described and, in a most compact case, may all be embodied physically within a single chip.

At least one of the computer readable software programs 10C is assumed to include program instructions that, when executed by the associated DP, enable the device to operate in accordance with the exemplary embodiments of this invention as detailed above. That is, the exemplary embodiments of this invention may be implemented at least in part by computer software executable by the DP l0A of the UE 10 (or by similar software stored in the transmitting station 101/database 102 for aspects of the invention related to the transmitting station/database), or by hardware, or by a combination of software and hardware (and firmware).

In general, the various embodiments of the cognitive radio/UE 10 can include, but are not limited to, cellular telephones, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, as well as portable units or terminals that incorporate combinations of such functions.

The computer readable memories shown variously at Figure 6 may be of any type suitable to the local technical environment and may be implemented using any suitable data storage technology, such as semiconductor based memory devices, flash memory, magnetic memory devices and systems, optical memory devices and systems, fixed memory and removable memory. The various processors/chips may be of any type suitable to the local technical environment, and may include one or more of general purpose computers, special purpose computers, microprocessors, digital signal processors (DSPs) and processors based on a multicore processor architecture, as non-limiting examples.

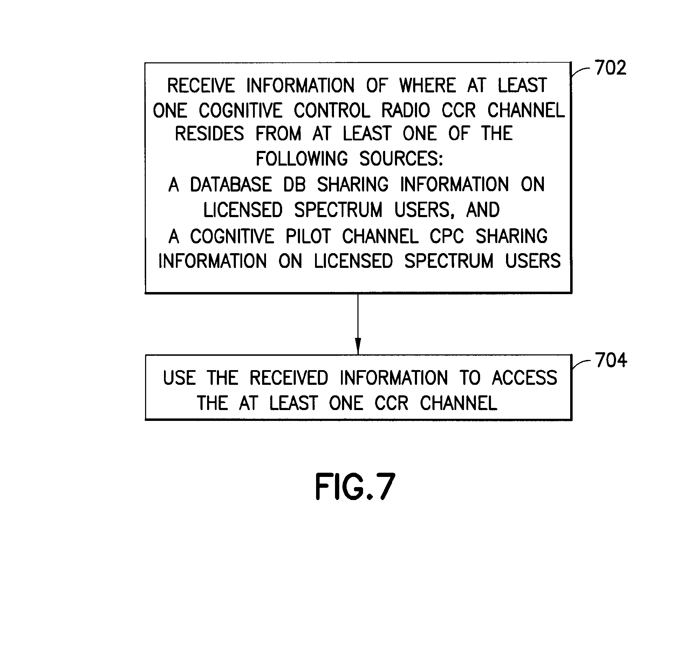

Figure 7 is a logic flow diagram that illustrates the operation of a method, and a result of execution of computer program instructions, in accordance with the exemplary embodiments of this invention. Also Figure 7 describes functionality of an apparatus such as the cognitive radio according to an embodiment these teachings. In accordance with these exemplary embodiments at block 702 the apparatus receives information of where at least one cognitive control radio CCR channel resides from at least one of the following sources: a database DB sharing information on licensed spectrum users, and a cognitive pilot channel CPC sharing information on licensed spectrum users. At block 704 the apparatus then uses that received information to access the at least one CCR channel.

In a specific embodiment according to the above description for Figure 7, the information of where the at least one CCR channel resides comprises the used frequency for the at least one CCR channel.

In another specific embodiment according to the above description for Figure 7 with or without the intervening specific embodiment, the apparatus detects from the received information that the used frequency for the at least one CCR channel has changed, and in two particular embodiments the detecting is based at least partly on checking or re-checking the DB or CPC and/or the checking is performed in response to at least one of the following conditions: a periodic timer expires, the apparatus discovers interference from a primary user on a channel, and the apparatus enters a new geographic area.

In another specific embodiment according to the above description for Figure 7 with or without any of the intervening specific embodiments, further comprising the apparatus sending a message that comprises information that primary user activity (e.g., which the apparatus discovered via spectrum sensing) to a network node which has access to the database or other source of the information about the licensed users that is carried on the CPC.

In another specific embodiment according to the above description for Figure 7 with or without any of the intervening specific embodiments, the apparatus sends, via the at least one CCR channel, a signal indicating that the at least one CCR has changed.

The various blocks shown in Figure 7 may be viewed as method steps, and/or as operations that result from operation of computer program code, and/or as a plurality of coupled logic circuit elements constructed to carry out the associated function(s).

In general, the various embodiments may be implemented in hardware or special purpose circuits, software (computer readable instructions embodied on a computer readable medium), logic or any combination thereof. For example, some aspects such as the sequence generator may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation such as Figures 4-5 and 7, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

In one particular embodiment, such an apparatus described above for Figure 7 may be a UE 10 such as that shown at Figure 6, or one or more components thereof. The apparatus has at least one processor (e.g., 10A, 40, 42) or a receiver (e.g., 38 with 40 or 39) which receives the information of where the at least one cognitive control radio CCR channel resides and uses that received information to access the at least one CCR channel. As one tangible example, the apparatus uses that received information to access the at least one CCR channel by tuning its receiver (e.g., 39) to, and receiving, the at least one CCR channel). In another embodiment there is a computer readable memory (e.g., 43, 45, 47) storing a program (e.g., 10C) of instructions which when executed by at least one processor (e.g., 10A, 40, 42) result in the actions detailed above for Figure 7 and the specific embodiments described thereafter.

Embodiments of the inventions may be practiced in various components such as integrated circuit modules. The design of integrated circuits ICs is by and large a highly automated process. Complex and powerful software tools are available for converting a logic level design into a semiconductor circuit design ready to be etched and formed on a semiconductor substrate. Figure 7 may also represent specific circuit functions of an integrated circuit or chip.

Various modifications and adaptations may become apparent to those skilled in the relevant arts in view of the foregoing description, when read in conjunction with the accompanying drawings. However, any and all modifications of the teachings of this invention will still fall within the scope of the non-limiting embodiments of this invention.

Although described in the context of particular embodiments, it will be apparent to those skilled in the art that a number of modifications and various changes to these teachings may occur. Thus, while the invention has been particularly shown and described with respect to one or more embodiments thereof, it will be understood by those skilled in the art that certain modifications or changes may be made therein without departing from the scope and spirit of the invention as set forth above, or from the scope of the ensuing claims.

The work leading to this invention has received funding from the European Community's Seventh Framework Programme FP7/2007-2013 under grant agreement no. 216248.

## Claims

1. A method comprising:
receiving at an apparatus information of where at least one cognitive control radio channel resides from at least one of the following sources: a database sharing information on licensed spectrum users, and a cognitive pilot channel sharing information on licensed spectrum users; and
using the received information to access the at least one cognitive control radio channel.

2. A method according to claim 1, in which the information of where the at least one cognitive control radio channel resides comprises a used frequency for the at least one cognitive control radio channel.

3. A method according to any one of claims 1-2, further comprising:
detecting from the received information that the used frequency for the at least one cognitive control radio channel has changed.

4. A method according to claim 3, in which the detecting is based at least partly on checking or re-checking the database or cognitive pilot channel.

5. A method according to any of claims 3-4, in which the detecting is performed in response to at least one of the following conditions: expiration of a periodic timer, discovery by the apparatus of interference from a primary user on a channel, and the apparatus entering a new geographic area.

6. A method according to any of claims 1-5, further comprising:
detecting primary user activity via spectrum sensing; and
sending a message that comprises information about the primary user activity to a network node which has access to at least one of the database and another source of the information about the licensed users that is carried on the cognitive pilot channel.

7. A method according to any of claims 1-6, further comprising:
sending via the at least one cognitive control radio channel a signal indicating that the at least one cognitive control radio channel has changed.

8. A method according to any of claims 1-7, further comprising:
sending to a cognitive radio node operating in a cognitive radio network at least information on licensed spectrum users and information of where the at least one cognitive control radio channel resides that was received from the database or the cognitive pilot channel.

9. A method according to any of claims 1-8, in which the information on the licensed spectrum users and the information of where the at least one cognitive control radio channel resides is received at the apparatus from a whitespace database which the apparatus accesses using geographical location information of the apparatus.

10. A method according to any of claims 1-9, further comprising:
at least one of sending to the cognitive radio node and receiving from the cognitive radio node spectrum sensing information on the at least one cognitive control radio channel;
in which the apparatus comprises a user equipment.

11. A method according to any of claims 1-10, in which:
the information on the licensed spectrum users and the information of where the at least one cognitive control radio channel resides is received via a cellular receiver of the apparatus; and
the spectrum sensing information is at least one of received via a cognitive radio receiver of the apparatus and sent via a cognitive radio transmitter of the apparatus.

12. An apparatus, comprising a data processing means for performing a method according to any of claims 1-11.

13. An apparatus, comprising
at least one processor; and
at least one memory storing a computer readable program;
wherein the at least one memory storing the computer readable program is configured with the at least one processor to at least:
receive information of where at least one cognitive control radio channel resides from at least one of the following sources: a database sharing information on licensed spectrum users, and a cognitive pilot channel sharing information on licensed spectrum users; and
use the received information to access the at least one cognitive control radio channel.

14. A computer readable medium storing a computer readable program executable by at least one processor to perform actions comprising:
receiving information of where at least one cognitive control radio channel resides from at least one of the following sources: a database sharing information on licensed spectrum users, and a cognitive pilot channel sharing information on licensed spectrum users; and
using the received information to access the at least one cognitive control radio channel.
